# EUROPÄISCHE PATENTANMELDUNG

(11) **EP 0 910 966 A2**
(43) Veröffentlichungstag der Anmeldung: **28.04.1999**
(21) Anmeldenummer: 98119065.5
(22) Anmeldetag: 08.10.1998
(51) Int. Cl.: A45C 11/38, A45F 3/00

(54) **Tragevorrichtung für einen Kamerarecorder**

(30) Priorität: 16.10.1997 DE 29718389 U
(71) Anmelder: GRUNDIG Aktiengesellschaft, 90762 Fürth (DE)
(72) Erfinder: Süslüyan, Taniel, Grundig AG, 90762 Fürth (DE)

(57) **Zusammenfassung**

Die Erfindung betrifft eine Tragevorrichtung (1,6,7,8,11) für einen Kamerarecorder (15) mit einer Tragetasche (1,11). Diese Tragetasche weist eine erste Gehäuseschale (1) zur Aufnahme des Kamerarecorders und an ein an zwei sich gegenüberliegenden Seiten der ersten Gehäuseschale (1) befestigtes Gurtband (6) auf, das als Bauchgurt ausgebildet ist. Die erste Gehäuseschale (1) weist in dem beim Tragen der Tragevorrichtung einem Träger zugewandten Bereich eine entsprechend den Abmessungen des Kamerarecorders hochgezogene erste Taschenwand (18) auf, wobei die erste Gehäuseschale (1) in dem beim Tragen der Tragetasche dem Träger abgewandten Bereich eine gegenüber der ersten Taschenwand zumindest in Teilbereichen niedrigere zweite Taschenwand (19) aufweist, die zum Eingreifen der Hand (14) des Trägers bei einer Herausnahme und einem Einführen des Kamerarecorders (15) in die Tragetasche (1,11) vorgesehen ist.

## Beschreibung

Die Erfindung betrifft eine Tragevorrichtung für einen Kamerarecorder.

Eine derartige Tragevorrichtung dient insbesondere dazu, einen Kamerarecorder dann aufzubewahren, wenn dieser nicht benötigt wird. Dies ist beispielsweise für Transportzwecke erforderlich. Bisher bekannte Tragevorrichtungen bestehen in der Regel aus einer an die Form des Kamerarecorders angepaßten Tragetasche, an der ein Schultergurt befestigt ist.

Der Erfindung liegt die Aufgabe zugrunde, eine Tragevorrichtung für einen Kamerarecorder anzugeben, die bei einer sicheren Aufbewahrung des Kamerarecorders dennoch einen schnellen Zugriff für Aufnahmen ermöglicht.

Diese Aufgabe wird durch eine Tragevorrichtung für einen Kamerarecorder mit einer Tragetasche gelöst, die eine erste Gehäuseschale zur Aufnahme des Kamerarecorders und an ein an zwei sich gegenüberliegenden Seiten der ersten Gehäuseschale befestigtes Gurtband, das als Bauchgurt ausgebildet ist, aufweist, wobei die erste Gehäuseschale in dem beim Tragen der Tragevorrichtung einem Träger zugewandten Bereich eine entsprechend den Abmessungen des Kamerarecorders hochgezogene erste Taschenwand aufweist und wobei die erste Gehäuseschale in dem beim Tragen der Tragetasche dem Träger abgewandten Bereich eine gegenüber der ersten Taschenwand zumindest in Teilbereichen niedrigere zweite Taschenwand aufweist, die zum Eingreifen der Hand des Trägers bei einer Herausnahme und einem Einführen des Kamerarecorders in die Tragetasche vorgesehen ist.

Die Tragevorrichtung besteht somit im wesentlichen aus der an dem Bauchgurt befestigten Tragetasche, die nach oben offen sein kann und auch an der dem Träger abgewandten Seite eine Öffnung aufweist. Die Tragetasche macht sich somit das Prinzip eines Pistolengurtes zunutze, so daß der Kamerarecorder in ähnlich schneller Weise aus der Tragevorrichtung bei Bedarf entnommen werden kann und auch ebenso schnell und einfach wieder in die Tragevorrichtung sicher eingeführt werden kann. Besonders vorteilhaft ist es, wenn die in der Tragetasche vorgesehene Ausnehmung zum Herausnehmen des Kamerarecorders im Bereich einer am Kamerarecorder angeordneten Halteschlaufe angeordnet ist.

Eine besonders schnelle und ergonomische Handhabung beim Herausnehmen des Kamerarecorders aus der Tragetasche wird dadurch erreicht, daß die erste Gehäuseschale an dem Gurt schräg angeordnet ist.

Eine vorteilhafte Möglichkeit für eine Schrägstellung der Tragetasche gegenüber dem Gurt besteht darin, daß zur Befestigung des Gurtes an der Tragevorrichtung an der erste Gehäuseschale ein erster Gurtansatz, der im oberen Bereich der Tragevorrichtung angeordnet ist, und ein zweiter Gurtansatz, der im unteren Bereich der ersten Gehäuseschale angeordnet ist, vorgesehen sind.

Das Herausnehmen und Wiedereinführen des Kamerarecorders in die Tragevorrichtung wird weiter dadurch vereinfacht, daß die Ausbildung der Erniedrigung der zweiten Taschenwand an die Anordung eines am Kamerarecorder vorgesehenen Haltegriffes angepaßt ist.

Ein Schutz bei Nichtbenutzung des Kamerarecorders sowie beim Transport des Kamerarecorders auch gegen ein Herausfallen aus der ersten Gehäuseschale kann dadurch sichergestellt werde, daß die Tragetasche eine zweite Gehäuseschale aufweist, die als Gegenstück zur ersten Gehäuseschale ausgebildet ist und die durch die erste Gehäuseschale offenen Teile der Tragetasche abdeckt.

Eine zweckgerechte Nutzung der Tragevorrichtung entsprechend den jeweiligen Benutzerwünschen wird dadurch erreicht, daß die zweite Gehäuseschale mit der ersten Gehäuseschale verbindbar und lösbar ist.

Ein weiterer Zusatznutzen der Tragevorrichtung ergibt sich dadaurch, daß die zweite Gehäuseschale entsprechend der Form einer Schirmmütze ausgebildet ist. Hierdurch kann die zweite Gehäuseschale bei Bedarf von der Tragetasche entfernt werden und beispielsweise als Sonnenschutz dienen.

Ein einfaches Öffnen und Schließen der Tasche wird dadurch erreicht, daß die zweite Taschenwand der ersten Gehäuseschale eine erste Verbindungsvorrichtung aufweist, die zur Verbindung mit einer korrespondierenen auf der zweiten Gehäuseschale angeordneten zweiten Verbindungsvorrichtung vorgesehen ist.

Eine Befestigung der als Deckel dienenden Gehäuseschale an der die eigentliche Tasche bildenden ersten Gehäuseschale kann dadurch erfolgen, daß die erste Taschenenwand der ersten Gehäuseschale an der dem Träger zugewandten Seite eine erste Befestigungsvorrichtung zur Befestigung mit einer auf der zweiten Gehäuseschale vorgesehenen zweiten Befestigungsvorrichtung aufweist.

Eine vollständige Ausrüstung der Tragevorrichtung mit weiteren Zusatz-und/oder Ersatzteilen kann dadurch ermöglicht werde, daß die Tragevorrichtung eine Tasche insbesondere zur Aufnahme einer Aufzeichnungskassette aufweist.

Eine zusätzliche Funktion beispielsweise zur Aufbewahrung von Ausweisen oder Geld wird dadurch erreicht, daß im Bereich des Gurtansatzes und/oder im Bereich des Gurtes mindestens eine weitere Taschenöffnung vorgesehen ist.

Im folgenden wird die Erfindung anhand der in den Figuren dargestellten Ausführungsbeispiele näher beschrieben und erläutert.

Es zeigen:
- Fig. 1: ein Ausführungsbeispiel einer Tragevorrichtung für einen Kamerarecorder ohne Kamerarecorder und
- Fig. 2: ein weiteres Ausführungsbeispiel für eine Tragevorrichtung für einen Kamerarecorder mit Kamerarecorder.

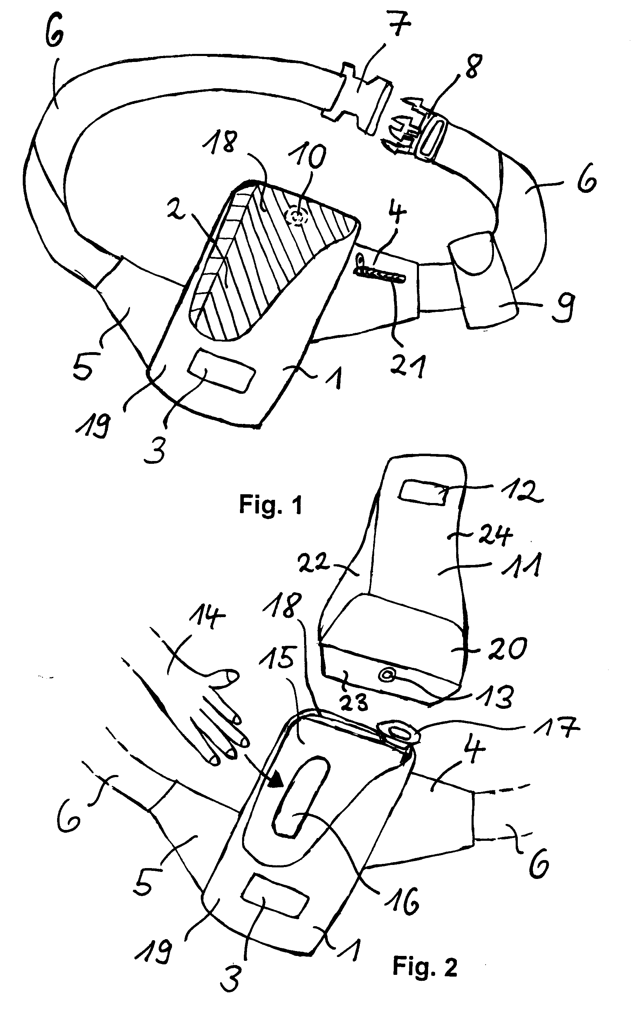

Fig. 1 zeigt ein erstes Ausführungsbeispiel einer Tragevorrichtung 1,6,7,8,11, wobei aus Gründen der Übersichtlichkeit in Fig. 1 auf die Darstellung des zugehörigen Kamerarecorders verzichtet worden ist. Die Tragevorrichtung 1,6,7,8,11 besteht im wesentlichen aus einer Tragetasche 1,11, die an einem Gurtband 6 befestigt ist. Die Tragetasche 1 besteht im wesentlichen aus einer ersten Gehäuseschale 1 zur Aufnahme des Kamerarecorders. Die Befestigung des Gurtes 6 an der ersten Gehäuseschale 1 erfolgt jeweils über einen ersten Gurtansatz 4 sowie einen zweiten Gurtansatz 5. Der erste Gurtansatz 4 ist im oberen Bereich der ersten Gehäuseschale 1 angeordnet, während der zweite Gurtansatz im unteren Bereich der ersten Gehäuseschale 1 angeordnet ist. Die erste Gehäuseschale 1 weist in dem beim Tragen der Tragevorrichtung dem Träger zugewandten Bereich ein entsprechend den Abmessungen des Kamerarecorders hochgezogene erste Taschenwand 18 auf. Die gegenüberliegende zweite Taschenwand 19 ist in dem beim Tragen der Tragetasche dem Träger abgewandten Bereich erniedrigt. An der zweiten Taschenwand ist eine erste Verbindungsvorrichtung 3, beispielsweise in Form eines Klettbandes vorgesehen, die zur Verbindung mit einer korrespondierenden auf einer zweiten Gehäuseschale zweiten Verbindungsvorrichtung vorgesehen ist (vergleiche Fig. 2). Darüberhinaus ist an der ersten Taschenwand 18 an der dem Träger zugewandten Seite eine erste Befestigungsvorrichtung 10, beispielsweise in Form eines Druckknopfes vorhanden, die zur Befestigung mit einer auf der zweiten Gehäuseschale vorgesehenen zweiten Befestigungsvorrichtung vorgesehen ist (vergleiche Fig. 2). Am Gurtband 6 ist darüber hinaus eine Tasche 9 angeordnet, die beispielsweise zur Aufnahme von Zubehör, insbesondere einer Aufzeichnungskassette dient. Im Bereich des ersten Gurtansatzes 4 ist eine Taschenöffnung 21 vorhanden, die beipielsweise mit einem Reißverschluß und zur Aufnahme von Geld etc. dienen kann. Ein Anlegen und Abnehmen des Gurtbandes 6 wird durch eine lösbare Schließvorrichtung 7, 8 sichergestellt.

Durch die versetzte Befestigung des Gurtbandes 6 an der ersten Gehäuseschale 1 wird bewirkt, daß die erste Gehäuseschale bei angelegter Tragevorrichtung gegenüber dem Gurtband 6 schräg steht. Hierdurch wird ein ergonomisch vorteilhafter Eingriff an den in der ersten Gehäuseschale 1 angeordneten Kamerarecorder ermöglicht. Durch die Kombination aus Bauchgurt 6 und der am Bauchgurt angeordneten schräggestellten ersten Gehäuseschale 1 liegt der Kamerarecorder ähnlich einem bekannten Pistolengurt immer griffbereit zur Hand. Anstelle der versetzt angeordneten Gurtansätze 4, 5 ist es zur Erzielung eines schrägen Sitzes der ersten Gehäuseschale 1 auch möglich, daß die erste Gehäuseschale 1 an dem gerade ausgebildeten Gurtband 6 schräg befestigt ist.

Fig. 2 zeigt ein weiteres Ausführungsbeispiel für eine Tragevorrichtung für einen Kamerarecorder 15. In Fig. 2 werden soweit übereinstimmend bereits die im Zusammenhang mit Fig. 1 eingeführten Bezugszeichen verwendet. So weist die Tragevorrichtung eine erste Gehäuseschale 1 auf, an der über Gurtansätze 4, 5 ein Gurtband 6 befestigt ist. In der aus einer ersten Taschenwand 18 und einer im vorderen Teilbereich niedrigeren zweiten Taschenwand 19 mit dazwischenliegenden Seitenwänden gebildeten ersten Gehäuseschale 1 ist ein Kamerarecorder 15 angeordnet. Der Kamerarecorder 15 weist einen Haltegriff 16 auf, in den die Hand 14 eines Benutzers eingeführt werden kann. Fig. 2 zeigt darüber hinaus eine zweite Gehäuseschale 11, die als Gegenstück zur ersten Gehäuseschale 1 ausgebildet ist. Die zweite Gehäuseschale 11 weist eine als Deckel dienende Deckelfläche 20 mit angeformter Lasche 23 auf. Auf der Lasche 23 ist eine zweite Befestigungsvorrichtung 13 angeordnet. Auf der zum vorderen Abdecken der ersten Gehäuseschale 1 vorgesehenen Seite 24 der zweiten Gehäuseschale 11 ist darüber hinaus eine zweite Verbindungsvorrichtung 12 vorgesehen, die zur Verbindung mit der korrespondierenden ersten Verbindungsvorrichtung 3 der ersten Gehäuseschale 1 dient.

Fig. 2 veranschaulicht nochmals, auf welch einfache Weise die Tragevorrichtung das Herausnehmen und Einführen des Kamerarecorders 15 ermöglicht. Hierzu wird bei bereits geöffneter Tragetasche 1, 11, d.h. wenn die zweite Gehäuseschale offen oder entfernt ist, lediglich die Hand 14 in die entsprechende Haltevorrichtung 16 des Kamerarecorders 15 eingeführt und der Kamerarecorder 15 mit dem Objektiv 17 ans Auge des Benutzers geführt. Der Vorgang beim Herausnehmen und Einführen des Kamerarecorders entspricht dabei im wesentlichen dem Einführen und Herausnehmen eines Revolvers aus einem Revolvergurt. Die Verbindungsvorrichtungen 3, 12 der ersten und zweiten Gehäuseschale 1, 11 sind beispielsweise als Klettverschluß ausgebildet, während die Befestigungsvorrichtungen 10, 13 der ersten und zweiten Gehäuseschale 1, 11 beispielsweise als Druckknöpfe ausgebildet sind. Durch die Abnehmbarkeit der zweiten Gehäuseschale wird sichergestellt, daß der Benutzer beispielsweise bei häufiger Nutzung des Kamerarecorders 15 einen schnellen Zugriff hat. Bei Nichtbenutzung des Kamerarecorders 15 kann mit Hilfe der Befestigungsvorrichtungen 10, 13 sowie der Verbindungsvorrichtungen 3, 12 der Kamerarecorder bzw. die Tragetasche 1, 11 wieder sicher verschlossen werden. Eine 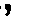 Aufbewahrung" der zweiten Gehäuseschale 11 für den Fall. daß diese vollständig abgenommen werden soll, kann dadurch sichergestellt werden, daß an dem Gurtband 6 beispielsweise eine weitere Befestigungsvorrichtung vorgesehen ist, an der beispielsweise die Verbindungsvorrichtung 12 oder die Befestigungsvorrichtung 13 angebracht werden kann. Darüber hinaus ist es auch möglich, daß die zweite Gehäuseschale 11 die Form einer Schirmmütze besitzt, so daß der Benutzer bei abgenommener Gehäuseschale 11 diese als Kopfbedeckung verwenden kann.

## Patentansprüche

1. Tragevorrichtung (1, 6, 7, 8, 11) für einen Kamerarecorder (15) mit einer Tragetasche (1, 11), die eine erste Gehäuseschale (1) zur Aufnahme des Kamerarecorders (15) und an ein an zwei sich gegenüberliegenden Seiten der ersten Gehäuseschale (1) befestigtes Gurtband (6), das als Bauchgurt ausgebildet ist, aufweist, wobei die erste Gehäuseschale (1) in dem beim Tragen der Tragevorrichtung (1, 6, 7, 8, 11) einem Träger zugewandten Bereich eine entsprechend den Abmessungen des Kamerarecorders (15) hochgezogene erste Taschenwand (18) aufweist und wobei die erste Gehäuseschale (1) in dem beim Tragen der Tragetasche (1) dem Träger abgewandten Bereich eine gegenüber der ersten Taschenwand (18) zumindest in Teilbereichen niedrigere zweite Taschenwand (19) aufweist, die zum Eingreifen der Hand (14) des Trägers bei einer Herausnahme und einem Einführen des Kamerarecorders (15) in die Tragetasche (1, 11) vorgesehen ist.

2. Tragevorrichtung nach Anspruch 1,
**dadurch gekennzeichnet**,
daß die erste Gehäuseschale (1) an dem Gurt (6) schräg angeordnet ist.

3. Tragevorrichtung nach einem der Ansprüche 1 oder 2,
**dadurch gekennzeichnet**,
daß zur Befestigung des Gurtes (6) an der Tragevorrichtung (1, 6, 7, 8, 11) an der erste Gehäuseschale (1) ein erster Gurtansatz (4), der im oberen Bereich der Tragevorrichtung (1, 11) angeordnet ist, und ein zweiter Gurtansatz (5), der im unteren Bereich der ersten Gehäuseschale (1) angeordnet ist, vorgesehen sind

4. Tragevorrichtung nach einem der Ansprüche 1 bis 3,
**dadurch gekennzeichnet**,
daß die Ausbildung der Erniedrigung der zweiten Taschenwand (19) an die Anordung eines am Kamerarecorder (15) vorgesehenen Haltegriffes (16) angepaßt ist.

5. Tragevorrichtung nach einem der Ansprüche 1 bis 4,
**dadurch gekennzeichnet**,
daß die Tragetasche (1, 11) eine zweite Gehäuseschale (11) aufweist, die als Gegenstück zur ersten Gehäuseschale (1) ausgebildet ist und die durch die erste Gehäuseschale (1) offenen Teile der Tragetasche (1, 11) abdeckt.

6. Tragevorrichtung nach einem der Ansprüche 1 bis 5,
**dadurch gekennzeichnet**,
daß die zweite Gehäuseschale (11) mit der ersten Gehäuseschale (1) verbindbar und lösbar ist.

7. Tragevorrichtung nach einem der Ansprüche 1 bis 60,
**dadurch gekennzeichnet**,
daß die zweite Gehäuseschale (11) entsprechend der Form einer Schirmmütze ausgebildet ist.

8. Tragevorrichtung nach einem der Ansprüche 1 bis 7,
**dadurch gekennzeichnet**,
daß zweite Taschenwand (19) der ersten Gehäuseschale (1) eine erste Verbindungsvorrichtung (3) aufweist, die zur Verbindung mit einer korrespondierenen auf der zweiten Gehäuseschale (11) angeordneten zweiten Verbindungsvorrichtung (12) vorgesehen ist.

9. Tragevorrichtung nach einem der Ansprüche 1 bis 8,
**dadurch gekennzeichnet**,
daß die erste Taschenenwand (18) der ersten Gehäuseschale (1) an der dem Träger zugewandten Seite eine erste Befestigungsvorrichtung (10) zur Befstigung mit einer auf der zweiten Gehäuseschale (11) vorgesehenen zweiten Befestigungsvorrichtung (13) aufweist.

10. Tragevorrichtung nach einem der Ansprüche 1 bis 9,
**dadurch gekennzeichnet**,
daß die Tragevorrichtung (1, 11) eine Tasche (9) insbesondere zur Aufnahme einer Aufzeichnungskassette aufweist.

11. Tragevorrichtung nach einem der Ansprüche 1 bis 10,
**dadurch gekennzeichnet**,
daß im Bereich des Gurtansatzes (4, 5) und/oder im Bereich des Gurtes (6) mindestens eine weitere Taschenöffnung (21) vorgesehen ist.
